# EUROPEAN PATENT SPECIFICATION

(11) **EP 3 672 289 B1**
(45) Date of publication and mention of the grant of the patent: **28.08.2024**
(21) Application number: 18846331.9
(22) Date of filing: 26.07.2018
(51) Int. Cl.: H04W 4/06, H04W 72/30

(54) **SERVICE SCHEDULING METHOD AND DEVICE**
DIENSTPLANUNGSVERFAHREN UND -VORRICHTUNG
PROCÉDÉ ET DISPOSITIF DE PROGRAMMATION DE SERVICE

(30) Priority: 16.08.2017 CN 201710702345
(43) Date of publication of application: 24.06.2020
(73) Proprietor: ZTE Corporation, Shenzhen, Guangdong 518057 (CN)
(72) Inventor: ZHOU, Heng, Shenzhen Guangdong 518057 (CN); WANG, Wei, Shenzhen Guangdong 518057 (CN); HOU, Xiaohui, Shenzhen Guangdong 518057 (CN); LI, Peng, Shenzhen Guangdong 518057 (CN)
(74) Representative: Aipex B.V.
(86) International application number: PCT/CN2018/097281
(87) International publication number: WO 2019/033915

(56) References cited:
- CN-A- 101 938 698
- CN-A- 101 938 712
- CN-A- 101 990 166
- CN-A- 105 472 569
- US-A1- 2013 336 189
- US-A1- 2014 153 471
- "Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 24 June 2017 (2017-06-24), XP051306328, Retrieved from the Internet <URL:http://www.3gpp.org/ftp/tsg_ran/WG2_RL2/Specifications/201706_final_specs_after_RAN_76/> [retrieved on 20170624]
- HUAWEI ET AL: "L2 aspects of SC-PTM", vol. RAN WG2, no. Malmo, Sweden; 20151005 - 20151009, 4 October 2015 (2015-10-04), XP051004779, Retrieved from the Internet <URL:http://www.3gpp.org/ftp/Meetings_3GPP_SYNC/RAN2/Docs/> [retrieved on 20151004]

## Description

### TECHNICAL FIELD

The present invention relates to, but not limited to the field of communications.

### BACKGROUND

An enhanced Multimedia Broadcast/Multicast Service (eMBMS) is introduced in the fourth generation mobile communication Long Term Evolution (LTE) system of related arts. Under a premise of Orthogonal Frequency Division Multiplexing (OFDM) modulation scheme, a point-to-multipoint broadcast channel is provided, which is suitable for a terminal having a video function to receive digital audio or video services in broadcast or multicast form through a Physical Multicasts CHannel (PMCH).

According to relevant protocols, in a physical layer scheduling mode of the eMBMS, one transmission block (i.e., a single stream) is used for each transmission time interval TTI, and this transmission block occupies all Multicast Broadcast Single Frequency Network (MBSFN) resources of a subframe of MBSFN (that is, one transmission block occupies all MBSFN symbols). This method of using a multicast subframe as a basic scheduling unit is quite different from conventional time-frequency resource allocation method for LTE. The above scheduling mode was designed from the beginning to consider applying the eMBMS in service scenarios such as video live broadcast, which has low real-time requirements and high consumption of wireless resources.

With development of wireless communication technology, application requirements for the eMBMS technology gradually extends to a public safety technology, cluster communication, Internet of things/Internet of vehicles and other fields, and the point-to-multipoint broadcast channel service mode has received increasing attentions. A Mission-Critical Push-To-Talk (MCPTT) architecture which is proposed by the international organization 3GPP based on the field of public safety technology, explicitly pointed out to use the eMBMS as the technical solution at a wireless side. Under this trend, there are some technical limitations in the eMBMS. The physical layer resource scheduling mode of the related arts has obvious conflicts with a new service mode mainly in the following two aspects.

According to an aspect, in a case where system bandwidth of different cells is different, the number of symbols that each MBSFN subframe can carry is different from each other. That is, the capacity of a single subframe carrying the service is stronger when the bandwidth of the cell is larger.

According to another aspect, in the cluster-communication scenario, the voice service, as the most important service mode, does not have a high demand for system resources and has a certain demand for a service capacity of a whole system. In other words, with a decrease of effective service payload, there is an increasing requirement on the system capacity, especially for Internet of things/Internet of vehicles applications. The effective service payload is continuously decreased, and the requirement on the system capacity is increasingly high.

"Technical Specification Group Radio Access Network; Evolved Universal Terrestrial Radio Access (E-UTRA) and Evolved Universal Terrestrial Radio Access Network (E-UTRAN); Overall description; Stage 2 (Release 14)" recites mapping multiple MBMS services to the same MCH.

HUAWEI et al. "L2 aspects of SC-PTM" recites allowing service multiplexing in MAC layer to enable SC-PTM UE that doesn't support DL parallel reception to simultaneously receive multiple MBMS services in one subframe.

In view of the above problems in the related arts, no effective solution has been found.

### SUMMARY

A method and a device for implementing service scheduling are provided in the embodiments of the present invention.

According to an embodiment of the present invention, a method for implementing service scheduling is provided, which includes: allocating, after a plurality of eMBMSs are paired, the plurality of eMBMSs to a multicast subframe; generating a multicast channel scheduling information (MSI) message based on multiplexing information of the plurality of eMBMSs; and mapping the plurality of eMBMSs to a physical signal within a scheduling period based on the MSI message.

Before allocating, after the plurality of eMBMSs are paired, the plurality of eMBMSs to the multicast subframe, the method further includes: calculating a number of symbols to be occupied of each of the plurality of eMBMSs in a physical layer; and when a total number of symbols to be occupied by the plurality of eMBMSs in the physical layer is less than or equal to a service carrying capacity of a first multicast subframe, determining the first multicast subframe as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, determining the second multicast subframe as the multicast subframe to which the plurality of eMBMSs are to be allocated.

According to another embodiment of the present invention, a device for implementing service scheduling is provided, which includes: an allocation module, configured to allocate, after a plurality of eMBMSs are paired, the plurality of eMBMSs to a multicast subframe; a generation module, configured to generate an MSI message based on multiplexing information of the multiple eMBMSs; and a mapping module, configured to map the multiple eMBMSs to a physical signal within a scheduling period based on the MSI message.

The device further includes: a calculation module, configured to calculate a number of symbols to be occupied by each of the plurality of eMBMSs in a physical layer before the allocation module allocates the plurality of eMBMSs to the multicast subframe after the plurality of eMBMSs are paired; a determination module, configured to: when a total number of symbols to be occupied by the plurality of eMBMSs in the physical layer is less than or equal to a service carrying capacity of a first multicast subframe, determining the first multicast subframe as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, determining the second multicast subframe as the multicast subframe to which the plurality of eMBMSs are to be allocated.

According to another embodiment of the present invention, a storage medium is further provided. The storage medium is configured to store program code for performing the following operations.

After the plurality of eMBMSs are paired, the plurality of eMBMSs are allocated to a multicast subframe.

An MSI message is generated based on multiplexing information of the plurality of eMBMSs.

The plurality of eMBMSs is mapped to a physical signal within a scheduling period based on the MSI message.

Before the plurality of eMBMSs are allocated to the multicast subframe after the plurality of eMBMSs are paired, a number of symbols to be occupied of each of the plurality of eMBMSs in a physical layer is calculated, and when a total number of symbols to be occupied by the plurality of eMBMSs in the physical layer is less than or equal to a service carrying capacity of a first multicast subframe, the first multicast subframe is determined as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, the second multicast subframe is determined as the multicast subframe to which the plurality of eMBMSs are to be allocated.

According to another embodiment of the present invention, a processor is further provided. The processor is configured to, when a program is run, execute the program for performing the following operations.

After the plurality of eMBMSs are paired, the plurality of eMBMSs are allocated to a multicast subframe.

An MSI message is generated based on multiplexing information of the multiple eMBMSs.

The plurality of eMBMSs is mapped to a physical signal within a scheduling period based on the MSI message.

Before the plurality of eMBMSs are allocated to the multicast subframe after the plurality of eMBMSs are paired, a number of symbols to be occupied of each of the plurality of eMBMSs in a physical layer is calculated, and when a total number of symbols to be occupied by the plurality of eMBMSs in the physical layer is less than or equal to a service carrying capacity of a first multicast subframe, the first multicast subframe is determined as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, the second multicast subframe is determined as the multicast subframe to which the plurality of eMBMSs are to be allocated.

In the embodiments of the present invention, flexible configuration of a subframe is realized by allocating multiple eMBMS services to a same multicast subframe, which solves the problem of waste of resource allocation for a single subframe in case of small-traffic service demand in related technologies, such that the eMBMS technology can be extended to more fields such as wireless public safety.

### BRIEF DESCRIPTION OF THE DRAWINGS

The drawings described herein, which are used for providing further understanding of this disclosure, constitute a part of this application. Exemplary embodiments of the present invention and the description are used for explaining the present invention.
FIG. 1 is a flow chart of a method for implementing service scheduling according to an embodiment of the present invention;
FIG. 2 is a block diagram of a device for implementing service scheduling according to an embodiment of the present invention;
FIG. 3 is a collaboration flowchart of module components of a voice service scheduling system based on an eMBMS architecture according to an embodiment of the present invention;
FIG. 4 is a schematic diagram of a multicast subframe multiplexing style and a subset division mode according to an embodiment of the present invention;
FIG. 5 is a schematic diagram showing format modification and message domain division of an MSI message by using a multicast subframe multiplexing method according to an embodiment of the present invention;
FIG. 6 is a processing logic diagram of a service pairing process according to an embodiment of the present invention; and
FIG. 7 is a schematic structural diagram of an MSI message corresponding to a multicast subframe multiplexing method according to an embodiment of the present invention.

### DETAILED DESCRIPTION

Hereinafter, the present invention will be described in detail with reference to the accompanying drawings and embodiments. It should be noted that the embodiments of the present application and features thereof may be combined with each other without conflict.

It should be noted that terms "first", "second" and the like in the specification, the claims and the above-mentioned drawings of the present invention are used to distinguish between similar objects, and are not necessarily used to describe a specific order or a sequential order.

### First embodiment

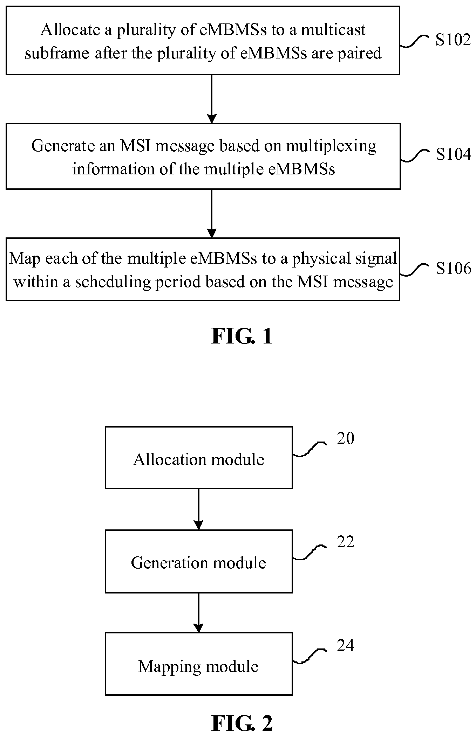

In the embodiment of the present invention, a method for implementing service scheduling is provided. FIG. 1 is a flowchart of a method for implementing service scheduling according to an embodiment of the present invention. As shown in FIG. 1, the method includes the following operations of S102 to S106.

In S 102, a plurality of eMBMSs are allocated to a multicast subframe after the multiple eMBMSs are paired.

In S 104, an MSI message is generated based on multiplexing information of the multiple eMBMSs.

In S106, the plurality of eMBMSs each is mapped to a physical signal within a scheduling period based on the MSI message.

With the above operations, multiple eMBMS services are allocated to the same multicast subframe, and thus flexible configuration of the subframe is realized and a resource of the single subframe is fully utilized, which solves the problem of waste of resource allocation for the single subframe in case of small-traffic service demand in related technologies. The multicast subframe is flexibly configured with a subframe multiplexing method, while considering a conventional architecture process to the most extent. With the technical solution of the embodiment, an application scenario of the eMBMS technology can be extended to the wireless public safety field, such as a MCPTT architecture-based public safety, fire control dispatch system, and a MCPTT architecture-based LTE for Railway (LTE-R) railway wireless dispatch system.

In an embodiment, the above operations may be implemented by, but is not limited to, a Multi-cell/multicast Coordination Entity (MCE) network element, a radio frequency (RF) unit, a transmitter, a base station, a terminal and the like.

In an embodiment, before the operation of allocating the plurality of eMBMSs to a multicast subframe after the multiple eMBMSs are paired, the technical solution of the embodiment includes: determining a number of symbols of each of the multiple eMBMSs and selecting a multicast subframe that meets a condition. The technical solution specifically includes the following operations of S11 to S12.

In S 11, the number of the symbols to be occupied by each of the multiple eMBMSs in a physical layer is calculated respectively.

In S12, when a total number of symbols to be occupied by the multiple eMBMSs in the physical layer is less than or equal to a service carrying capacity of a first multicast subframe, the first multicast subframe is determined as a multicast subframe to which the multiple eMBMSs are to be allocated. At this time, the multicast subframe may be a multicast subframe selected for carrying the eMBMSs.

In another embodiment, the scheduling period is further considered. The technical solution includes the following operations of S21 to S23.

In S21, the number of the symbols to be occupied by each of the multiple eMBMSs in a physical layer is calculated respectively.

In S22, it is determined whether a scheduling period of each of the multiple eMBMSs is consistent with each other, and whether the total number of symbols to be occupied by the multiple eMBMSs in the physical layer is less than or equal to a service carrying capacity of a second multicast subframe.

In S23, responsive to determining that the scheduling period of each of the multiple eMBMSs is consistent with each other, and the total number of the symbols to be occupied by the multiple eMBMSs in the physical layer is less than or equal to the service carrying capacity of the second multicast subframe, the second multicast subframe is determined as a multicast subframe for the multiple eMBMSs to be allocated.

In a case where the scheduling period is not considered at a sending terminal, when the multicast subframe is received and decoded, the multicast subframe may be parsed according to the scheduling period or without considering the scheduling period.

It should be noted that during paring of the services, the number of services to be paired may be two services, but is not limited to two services, and may be more services.

In the embodiment, the operation that the number of symbols to be occupied by each of the multiple eMBMSs in a physical layer is calculated respectively includes: respectively calculating the number of symbols to be occupied by each of the multiple eMBMSs in the physical layer based on at least one of the following parameters: a service scheduling period, a user-plane data payload to be carried in each service scheduling period or a Quality of Service (QoS) level of the eMBMS.

In this embodiment, the multiplexing information includes at least one of the following: a multiplexing style, a number of subsets occupied by each eMBMS, or a resource occupied by each subset, where the multiplexing style may indicate a division mode when the single multicast subframe is multiplexed. Specifically, the multiplexing style includes at least one of the following: frequency domain multiplexing, time domain multiplexing, multiplexing by a serial number of transmission element, or custom multiplexing style. The transmission element may be a Resource Element (RE).

In an embodiment, the operation that an MSI message is generated based on multiplexing information of the multiple eMBMSs includes the following operations of S31 to S33.

In S31, the multiplexing information used by the multiple eMBMSs on the multicast subframe is determined.

In S32, at least one of the following information of an Oct field is acquired based on the multiplexing information: a style domain, a set domain or a position domain.

In S33, the MSI message is written into the Oct field.

The operation that an MSI message is generated based on multiplexing information of the multiple eMBMSs includes: determining a multiplexing mode and generating the MSI message, where the MSI messages includes multiplexing mode information. The multiplexing mode information includes at least one of the following: multiplexing style information, occupation resource set information, or position information of the resource occupied by each eMBMS, which respectively correspond to the style domain, the set domain and the position domain in the MSI message.

In an embodiment, before the operation of S31, the technical solution further includes: filling in the MSI message, with a Logic ID (LCID) of each of the multiple eMBMSs and a serial number of a stop multicast subframe (Stop_MTCH).

In an embodiment, the operation that each of the multiple eMBMSs is mapped to a physical signal within a scheduling period based on the MSI message includes the following operations of S41 to S42.

In S41, different Multicast Traffic Channel (MTCH) transmission channels are generated for LCIDs of the multiple eMBMSs.

In S42, in each scheduling period, an original data payload of the multiple eMBMSs is encoded based on the MSI message and the multiple eMBMSs are mapped to symbol positions, corresponding to generated transmission channels, of the multicast subframe.

In an embodiment, in the operation that an MSI message is generated based on multiplexing information of the multiple eMBMSs includes generating the MSI message based on the multiplexing style of each of the multiple eMBMSs.

The "style domain, set domain and position domain" is optional, and the style domain or the set domain may not be written in some conditions.

The style domain is used for mapping of the multiplexing style of the multicast subframe. The set domain is used to indicate the number of subsets divided from the single multicast subframe under the present multiplexing style. The position domain is used for mapping of a time-frequency position occupied by each of the multiple eMBMSs in the multicast subframe.

In an embodiment, the style domain is defined as M bit for representing one of the following information: the time domain multiplexing or the frequency domain multiplexing, M is an integer greater than 1. Preferably, the style domain is defined as 2bit, where, 00 represents the time domain multiplexing and 01 represents the frequency domain multiplexing.

In an embodiment, the set domain is defined as K bit, where K is an integer greater than 1. In an example, the set domain may be defined as 3bit, ranging from 010 to 111.

In an embodiment, the position domain is defined as N bit for representing a stop subset position of each of the multiple eMBMSs, such as a stop subset position of a first eMBMS, a stop subset position of a second eMBMS and the like, N is an integer greater than 1. In an example, the position domain is defined as 3bit for representing the stop subset position of the multiple eMBMSs.

In the embodiment, each of the multiple eMBMSs is a voice service. The multiple eMBMSs may be other services, such as a text service, a video service and the like.

In an embodiment, after mapping the multiple eMBMSs to a physical signal within a scheduling period based on the MSI message generated according to the multiplexing style of the multiple eMBMSs, the method of the embodiment further includes: sending the physical signal according to the scheduling period. The multiple eMBMSs are carried in the physical signal to be transmitted to a receiving terminal. The receiving terminal parses the physical signal and obtains the corresponding services.

With the description of the above embodiments, those skilled in the art may clearly understand that the method provided in the above embodiments may be implemented by means of software in conjunction with needed general hardware platforms, and apparently, by means of hardware, but in many cases the former is a better embodiment. Based on such understanding, an essence or a contribution to the conventional technology of the technical solution of the embodiments of the present invention may be embodied in the form of software product. The computer software product is stored in a storage medium (such as a Read-Only Memory (ROM)/Random Access Memory (RAM), a magnetic disk, or an optical disk). The storage medium includes several instructions to enable a terminal device (such as a mobile phone, a computer, a server, or a network device, and the like) to perform each embodiment of the present invention.

### Second embodiment

A device for implementing service scheduling further provided in the embodiments of the present invention is configured to implement the above embodiments and specific implementation, which has been described and will not be elaborated herein. As used below, a term "module" may realize a combination of software and/or hardware with an intended function. Although the device described in the following embodiments is preferably implemented in software, implementations in hardware or a combination of software and hardware is also possible and envisaged.

FIG. 2 is a block diagram of a device for implementing service scheduling according to an embodiment of the present invention. The device may be applied in a MCE, a radio frequency unit, a transmitter, a base station, a terminal and other elements. As shown in FIG. 2, the device includes: an allocation module 20, a generation module 22 and a mapping module 24.

The allocation module 20 is configured to allocate multiple eMBMSs to a multicast subframe after the multiple eMBMSs are paired.

The generation module 22 is configured to generate an MSI message based on multiplexing information of the multiple eMBMSs.

The mapping module 24 is configured to map each of the multiple eMBMSs to a physical signal within a scheduling period based on the MSI message.

In an embodiment, the device may further include: a calculation module, a judgment module and a determination module. The calculation module is configured to before the allocation module 20 allocates the multiple eMBMSs to the multicast subframe after the multiple eMBMSs are paired, respectively calculate the number of symbols to be occupied by each of the multiple eMBMSs in a physical layer. The judgment module is configured to judge whether the scheduling period of each of the multiple eMBMSs is consistent with each other and whether the total number of symbols to be occupied by the multiple eMBMSs in the physical layer is less than or equal to a service carrying capacity of a second multicast subframe. The determination module is configured to: responsive to judging that the scheduling period of each of the multiple eMBMSs is consistent with each other and the total number of symbols to be occupied by the multiple eMBMSs in the physical layer is less than or equal to the service carrying capacity of the second multicast subframe, determine the second multicast subframe as a multicast subframe to which the multiple eMBMSs are to be allocated.

In an embodiment, the generation module includes: a determination unit, an acquisition unit and a writing unit. The determination unit is configured to determine the multiplexing information used by each of the multiple eMBMSs on the multicast subframe. The acquisition module is configured to acquire, based on the multiplexing information, at least one of the following information of an Oct field: a style domain, a set domain or a position domain. The writing unit is configured to write the MSI message into the Oct field. The style domain is used for mapping of a multiplexing style of the multicast subframe. The set domain is used to indicate the number of subsets divided from a single multicast subframe under the present multiplexing style. The position domain is used for mapping of a time-frequency position occupied by each of the multiple eMBMSs in the multicast subframe.

In an embodiment, the mapping module includes: a generation unit and a mapping unit. The generation unit is configured to generate different MTCH transmission channels for a LCIDs of the multiple eMBMSs. The mapping unit is configured to, in each scheduling period, encode an original data payload of each of the multiple eMBMSs based on the MSI message and map the encoded original data payload on a corresponding symbol position of the multicast subframe.

In an embodiment, each of the multiple eMBMSs is a voice service. The multiple eMBMSs may be other services, such as a text service, a video service and the like.

It should be noted that each of the above modules may be implemented by software or hardware, and the latter may be implemented in, but not limited to the following methods: the above modules being located in the same processor; or, each of the above modules being located respectively in different processors in any combination.

Based on this, a processor is further provided in the embodiment of the present invention. The processor is configured to run a program, that when being executed, performs the method according to the above embodiments and the specific implementation.

### Third embodiment

The embodiment is alternative for the present invention and is presented for supplementing and detailing the present invention.

In a scheduling mode of related technologies, upon dealing with a service with small traffic, when a resource (the number of symbols) of a single subframe exceeds a resource requirement of the single service, the remaining resources in the subframe cannot be effectively utilized. The bandwidth of the eMBMS subframe becomes larger when the resource requirement of the service degrades, and waste of resource is heavy. This scheduling mode also greatly limits a system service capacity of the eMBMS.

A method and a system for implementing service scheduling under an eMBMS framework are provided in the embodiment.

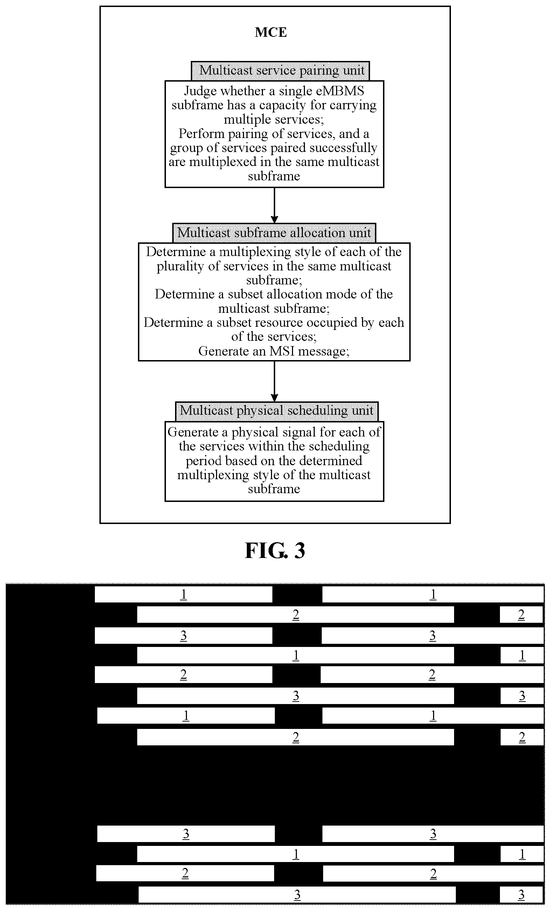

FIG. 3 is a collaboration flowchart of module components of a system for implementing voice service scheduling based on eMBMS architecture according to an embodiment of the present invention. The method and system for implementing service scheduling based on the eMBMS architecture in the embodiment of the present invention includes the following units: a multicast service pairing unit (corresponding to an allocation module of the second embodiment), a multicast subframe allocation unit (corresponding to a generation module of the second embodiment) and a multicast physical scheduling unit (corresponding to a mapping module of the second embodiment).

The multicast service pairing unit is configured to determine whether a single eMBMS subframe has a capacity to carrying multiple services and to select which services are simultaneously carried in the same multicast subframe.

The multicast subframe allocation unit is configured to determine a multiplexing mode of each of the multiple services in the same multicast subframe and map the multiple services to a specific MSI message format.

The multicast physical scheduling unit is configured to generate a physical signal within each scheduling period based on the determined multiplexing mode.

Each of the multicast service pairing unit, the multicast subframe allocation unit, and the multicast physical scheduling unit provided in the embodiment is deployed on the MCE.

Specifically, specific implementation of the multicast service pairing unit and a workflow thereof are as follows.

In a first step, the multicast service pairing unit calculates the service carrying capacity of each of the multicast subframes based on a system bandwidth of a multicast cell.

In a second step, for each eMBMS that is about to establish a session, a resource processing unit calculates the number of symbols to be occupied by the service in the physical layer by comprehensively considering the service scheduling period of the eMBMS, a user-plane data payload to be carried within each period, and a Quality of service (QoS) level of the eMBMS (corresponding to different encoding formats).

In a third step, when there is an eMBMS B that is about to establish a session, the number of RE to be consumed by the eMBMS B in the physical layer is less than the service carrying capacity of one multicast subframe, and at the same time there is an eMBMS A that has established or is about to establish a session and a remaining carrying capacity of the multicast subframe for carrying the eMBMS A can meet the requirement of the eMBMS B, the multicast service pairing unit pairs the eMBMS A and the eMBMS B and transmits a pairing result (carrying a LCID of each of the services paired successfully and the number of RE consumed by each of the services) to the multicast subframe allocation unit.

In a process of the multicast service pairing unit performing service pairing, the following criteria are followed.

The scheduling period of each of the multiple services paired successfully must be consistent.

The service carrying capacity of the multicast subframe must meet the requirements of both eMBMS A and eMBMS B for physical layer resources simultaneously.

When the services are paired, the number of services is not limited to 2, but may be more.

The type of the service paired successfully includes, but not limited to the voice service.

Specifically, the implementation of the multicast subframe allocation unit is as follows.

In a first step, the multiplexing style of each of the multiple services is confirmed.

The multiplexing style indicates a division mode when a single multicast subframe is multiplexed. Considering service characteristics of the eMBMS, for multicast subframe multiplexing, it should be considered that physical resources of the same service are distributed in frequency domain and time domain position discretely as far as possible, so as to obtain a diversity gain in the frequency domain and the time domain.

The multiplexing style does not need to be limited to a particular format. The multiplexing style may be the frequency domain (subcarrier) multiplexing, the time domain (symbol) multiplexing, multiplexing by RE serial number, or other custom multiplexing style. The multicast subframe allocation unit may support multiple multiplexing styles at the same time and select one of the multiplexing styles for a group of services that multiplex the same multicast subframe. Selection criteria of the multiplexing style may be defined according to different application scenarios.

The multicast subframe allocation unit may use a group of bit symbols to clearly indicate a selected type of multiplexing style. A mapping relationship between each of the bit symbols and a respective one of the different multiplexing styles needs to be negotiated in advance.

In a second step, a subset occupied by each service under the same multiplexing style is confirmed.

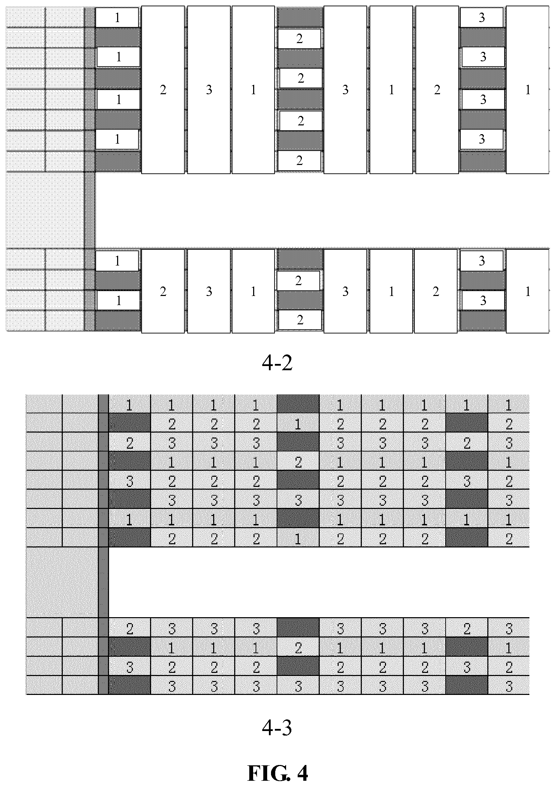

FIG. 4 is a schematic diagram of applying a multicast subframe multiplexing style and a subset division mode according to an embodiment of the present invention, which includes FIG. 4-1, FIG. 4-2 and FIG. 4-3, where "1" "2" and "3" respectively represents different subset division modes, the spacing is a reference signal, one multicast subframe may be divided into multiple subsets on the premise that the multiplexing style is determined.

Taking the frequency domain (subcarrier) multiplexing as an example, one multicast subframe may be divided into multiple subsets by serial numbers of the subcarriers within the subframe. For example, in a scenario that one subcarrier is divided into three subsets (as shown in FIG. 4-1), the subcarrier is divided by row with a row spacing being the reference signal, and according to a rule of performing mod 3 on the serial number of each of the subcarriers within the subframe, the one multicast subframe may be divided into three subsets which have equal subcarrier spacing in the frequency domain and occupy all eMBMS symbols in the time domain.

FIG. 4 also illustrates the time domain (symbol) multiplexing (as shown in FIG. 4-2). The subcarrier is divided into three subsets by column with a column spacing being the reference signal according to a rule of performing mod 3 on a symbol position for the resources within the subframe. FIG. 4 also illustrates the multiplexing by RE serial number (as shown in FIG. 4-3). The subcarrier is divided into three subsets based on a rule of performing mode 3 on all of the RE serial numbers by firstly numbering the resources within the subframe in the frequency domain and then in the time domain.

It should be noted that the number of available eMBMS symbols on each subcarrier is different from each other due to existence of the reference signal (RS), and therefore the number of eMBMS symbols in each subset is also different from each other.

The multicast subframe allocation unit flexibly selects the subset division mode of the multicast subframe and arranges a subset position occupied by each service based on different requirements of each service on the physical layer resources. The number of subsets occupied by the single service is not limited herein.

The multicast subframe allocation unit is configured to use a group of bit symbols to clearly indicate the number of the divided subsets, and to use another group of bit symbols to indicate the subset position occupied by each service.

In a third step, mapping of the MSI messages is completed. The multicast subframe allocation unit fills in the multiple services successfully paired with the MSI message (including 2 parts of the LCID and the Stop MTCH).

Each of different services corresponds to a respective one of different service logic IDs (LCID) into which the MSI message is written sequentially.

A field in the MSI message that represents "Stop MTCH", as defined by the conventional protocol, is used to indicate a serial number of stop multicast subframe corresponding to the service (LCID). In the multicast subframe multiplexing mode, the same serial number is written to the "Stop MTCH" field of each service successfully paired, and "Stop MTCH" fields for different services (LCID) are the same, which means that the above services adopt the multicast subframe multiplexing mode.

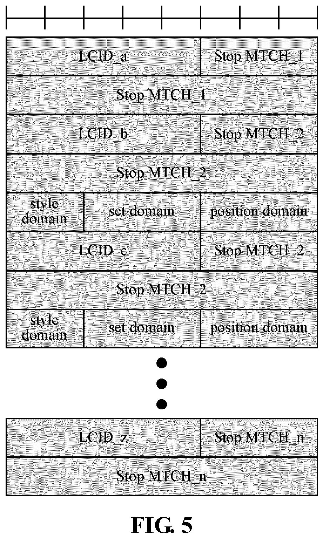

After each service successfully paired completes filling of the LCID and the "Stop MTCH" fields, one Oct field is to be added to the MSI message. The Oct field is functionally divided into different domains. FIG. 5 is a schematic diagram showing format modification and message domain division of an MSI message by using a multicast subframe multiplexing method according to an embodiment of the present invention.

The style domain is used for mapping of multiplexing styles of the multicast subframe. A bit stream of the "style domain" field is required to distinguish the different multiplexing modes of multicast subframe, and a UE may understand a multiplexing rule of the multicast subframe through the "style domain".

A "set domain" is used to indicate the number of subsets N divided from the single multicast subframe under a known multiplexing rule. The UE may obtain the number of subsets N divided from the single multicast subframe through the "set domain" and map of a physical resource position and the number of eMBMS symbols for each subset.

The "position domain" is used for mapping of the specific time-frequency position occupied by the service (LCID) in a multiplexed subframe. A bit stream of the "position domain" field indicates a serial number of a stop subset occupied by the service in the known multiplexing style and a subset allocation mode. For example, in a scenario that the multicast subframe is divided into three subsets, the result of decoding a bit of a "position domain" for a service A is equal to 1, and the result of decoding a bit of a "position domain" for a service B is equal to 3. That is to say, the service A occupies a first subset, and the service B occupies a second subset and a third subset.

The above-mentioned field division rule is only a functional definition, and not a strict definition rule. For example, when the same bit sequence can clearly indicate the number of subsets of the multicast frame and a serial number of the subset occupied by the service at the same time, the "set domain" and the "position domain" may also be merged.

Specifically, the specific implementation of the multicast physical scheduling unit is as follows.

In a first step, different MTCH transmission channels are generated for different LCIDs.

In a second step, according to the multiplexing rule of the different LCIDs and during each scheduling period, the original data payload of the service is encoded correspondingly and mapped to a symbol position of the service.

With the method and system provided in the embodiments of the present invention, on the basis of maintaining the conventional multicast subframe scheduling mode of the protocol, a resource scheduling mode for multiplexing the multiple eMBMSs in the same multicast subframe is provided. In the multicast subframe multiplexing mode, a description field is added to the service multiplexed for the subframe in the conventional MSI message of the protocol such that the UE maps of the service physical layer resources. When the subframe multiplexing mode is not selected, the conventional mode of the protocol is maintained.

The subframe multiplexing method described in the embodiment is flexible in configuration, which takes into account the conventional architecture flow to the maximum extent, and solves the problem of waste of resource allocation for the single subframe in case of small-traffic service demand in the eMBMS system. With the technical solution of the embodiments of the present invention, the application scenario of the eMBMS technology can be extended to the field of wireless public safety, such as a MCPTT architecture-based public safety, fire control dispatch system, and a MCPTT architecture-based LTE-R railway wireless dispatch system.

The embodiment further includes multiple examples.

### First example

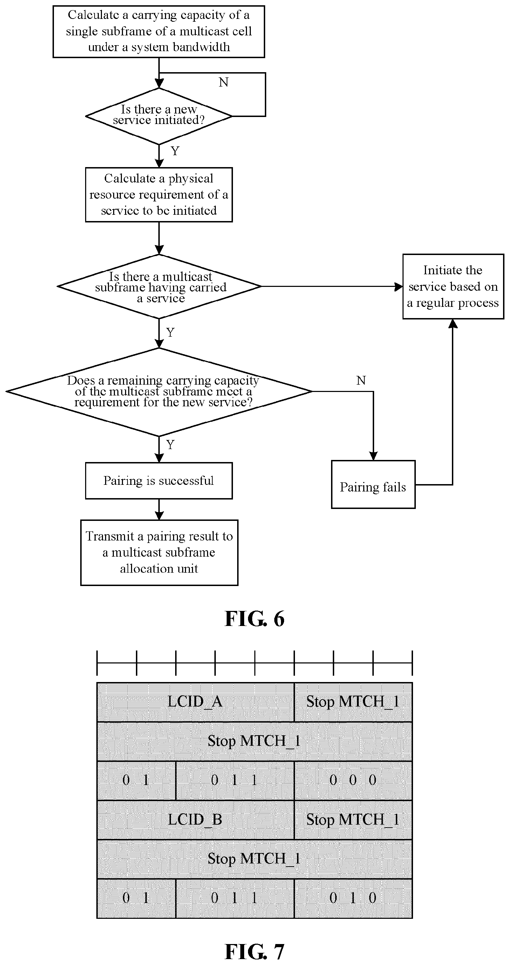

In the first example, it is assumed that a system bandwidth of the multicast cell is 5M Hz, the first two symbols in each subcarrier belong to a non-MBSFN region, and both of services A and B are the voice service, where an encoding format of the service A adopts AMR_WB 23.85, an encoding format of the service B adopts AMR_WB 12.85. FIG. 6 is a processing logic diagram of a service pairing process according to an embodiment of the present invention, which includes the following operations.

The multicast service pairing unit calculates a carrying capacity of each multicast subframe based on a system bandwidth configuration of a cell.

The multicast service pairing unit determines that the service A is about to be initiated and calculates a physical resource requirement of the service A (TBS within each scheduling period) based on the encoding format corresponding to the service A.

The multicast service pairing unit determines that the physical resource requirement of the service A is less than the carrying capacity of the single multicast subframe and carries the service A on a multicast subframe 1.

The multicast service pairing unit determines that the service B is about to be initiated and calculates a physical resource requirement of the service B (TBS within each scheduling period) based on the encoding format corresponding to the service B.

The multicast service pairing unit traverses all multicast subframes that are carrying the voice service, calculates a residual carrying capacity of the multicast subframe 1, and determines that the physical resource requirement of the service B can be met, and the pairing is successful. A pairing result is transmitted to the multicast subframe allocation unit.

### Second example

An exemplary process of realizing multicast subframe multiplexing scheduling (frequency-domain multiplexing mode) in response to the pairing result according to the present invention is as shown in FIG. 7. FIG. 7 is a schematic structural diagram of an MSI message corresponding to a multicast subframe multiplexing method according to an embodiment of the present invention. In the second example, the "style domain", the "set domain" and the "position domain" are defined as (2 bit, 3 bit, 3 bit) respectively, where a bit stream (00) of the "style domain" indicates the time domain multiplexing, a bit stream (01) of the "style domain" indicates the frequency domain multiplexing, and a bit stream (10) of the "style domain" indicates multiplexing by RE. Other fields are reserved.

The multicast subframe allocation unit determines the multiplexing style of the subframe. In this example, a frequency-domain multiplexing style is adopted.

The multicast subframe allocation unit determines subsets occupied by the service. According to a two-subset division mode, the physical resource requirement of the service A exceeds a carrying capacity of the subset. According to a three-subset division mode, the service A occupies two subsets and the service B occupies one subset, and thus multiplexing in the multicast subframe can be implemented. Therefore, the multicast subframe allocation unit determines that the 3-subset allocation mode is adopted in the subframe allocation, and the service A occupies subsets 0 and 1, and the service B occupies a subset 2.

The multicast subframe allocation unit generates an MSI message format, fills in the MSI message format with the LCID of each of the service A and the service B. Since the subframe multiplexing mode is adopted, a serial number of the same multiplexed multicast subframe is written into a "Stop MTCH" field corresponding to each of the service A and service B.

In the subframe multiplexing mode, an Oct field is added. Based on a preset definition, (01) is written to the "style domain", which indicates that the frequency-domain multiplexing mode is adopted, and (011) is written to the "set domain", which indicates that the whole subframe is divided into three subsets by the frequency domain. A bit stream (000) is written to a "position domain" of the service A, which indicates that a position of a start subset of the service A starts from a subset 0, and (010) is written to a "position domain" of the service B, which indicates that a position of a start subset of the service B starts from a subset 2. That is, the service A occupies 2 subsets and the service B occupies 1 subset. The multicast subframe allocation unit generates a final MSI message according to above processing results.

The multicast subframe allocation unit transmits the multiplexing mode in the subframe to the multicast physical scheduling unit. The multicast physical scheduling unit generates different MTCH transmission channels, and encodes the original data payload for each of the services A and B and maps the encoded services A and B to their corresponding symbol position.

The UE receives the MSI message, performs decoding on the corresponding physical resources based on the specific service multiplexing format, and acquires a corresponding service.

### Third example

An exemplary process of realizing the multicast subframe multiplexing scheduling (time-domain multiplexing mode) and generating the MSI message in response to the pairing result according to the present invention is described as follows. The "style domain", the "set domain" and the "position domain" are defined as (2 bit, 3 bit, 3 bit) respectively, where a bit stream (00) of the "style domain" indicates the time domain multiplexing, a bit stream (01) indicates the frequency domain multiplexing, a bit stream (10) indicates a RE multiplexing mode. Other fields are reserved.

The multicast subframe allocation unit determines the subframe multiplexing style. In this example, the time-domain multiplexing mode is adopted.

The multicast subframe allocation unit determines the subsets occupied by the service. Based on the two-subset division mode, the total resources of each of the two subsets can meet the physical resource requirement of each of the services A and B. Therefore, the multicast subframe allocation module determines that the two-subset allocation mode is adopted in the subframe allocation, and that the service A occupies a subset 0 and the service B occupies a subset 1.

A processing mode that the multicast subframe allocation unit generates an MSI message format and fills in the LCID field and the "Stop MTCH" field is consistent with the third step in the second example.

An Oct field is added. A bit stream (00) is written to the "style domain", which indicates the frequency-domain multiplexing mode is adopted, and a bit stream (010) is written to the "set domain", which indicates that the whole subframe is divided into two subsets by the frequency domain. A bit stream (000) is written to the "position domain" of the service A, which indicates that the position of the start subset of the service A starts from a subset 0, and a bit stream (001) is written to the "position domain" of the service B, which indicates that the position of the start subset of the service B starts from a subset 1. That is, the service A occupies one subset and the service B occupies another subset. The multicast subframe allocation unit generates a specific MSI message according to the above processing result.

### Fourth example

An exemplary process of realizing the multicast subframe multiplexing scheduling (RE multiplexing mode) and generating the MSI message in response to the pairing result according to the present invention is described as follows. The "style domain", the "set domain" and the "position domain" are defined as (2 bit, 3 bit, 3 bit) respectively, where a bit stream (00) of the "style domain" indicates the time domain multiplexing, a bit stream (01) indicates the frequency domain multiplexing, a bit stream (10) indicates the RE multiplexing mode. Other fields are reserved.

The multicast subframe allocation unit determines the multiplexing style of the subframe. In this example, the RE multiplexing mode is adopted.

The multicast subframe allocation unit determines the subsets occupied by the service. Based on the two-subset division mode, the physical resource requirement of the service B exceeds a carrying capacity of the subset. Based on the three-subset division mode, the service A occupies one subset, and the service B occupies two subsets, which may realize the multiplexing in the multicast subframe. Therefore, the multicast subframe allocation module confirms that the two-subset allocation mode is adopted in the subframe allocation, and that the service A occupies a subset 0 and the service B occupies subsets 1 and 2.

A processing mode that the multicast subframe allocation unit generates an MSI message format and fills in the LCID field and the "Stop MTCH" field is consistent with the third step in the second embodiment.

An Oct field is added. A bit stream (10) is written to the "style domain", which indicates the RE multiplexing mode is adopted. A bit stream (011) is written to the "set domain", which indicates that the whole subframe is divided into three subsets by frequency domain. A bit stream (000) is written to the "position domain" of the service A, which indicates that the position of the start subset of the service A starts from a subset 0, and A bit stream (001) is written to the "position domain" of the service B, which indicates that the position of the start subset of the service B starts from a subset 1. That is, the service A occupies one subset and the service B occupies other two subsets. The multicast subframe allocation unit generates a specific MSI message according to the processing result.

In the embodiment, a more flexible wireless scheduling method is provided based on the conventional eMBMS protocol. By modifying the definition of the field in the MCCH scheduling information (MSI) message, a scheduling method is provided to allocate multiple services in a same MBSFN subframe while maintaining the conventional implementation scheme, so as to avoid waste of resources in the subframe, thereby improving the overall efficiency and the service capacity of the system.

A storage medium is further provided in the embodiment of the present invention. In the embodiment, the above storage medium may be configured to store program code for performing the following operations.

In S 1, multiple eMBMSs are allocated to a multicast subframe after the multiple eMBMSs are paired.

In S2, an MSI message is generated based on multiplexing information of each of the multiple eMBMS services.

In S3, each of the multiple eMBMSs is mapped to a physical signal within a scheduling period based on the MSI message.

In the embodiment, the above storage medium may include but not limited to: a U-disk, a ROM, a RAM, a mobile hard disk, a magnetic disk, a CD and other media that can store the program code.

In the embodiment, a processor allocates the multiple eMBMSs to the same multicast subframe after the multiple eMBMSs are paired based on the program code stored in the storage medium.

In the embodiment, the processor generates the MSI message based on the multiplexing information of each of the multiple eMBMSs based on the program code stored in the storage medium.

In the embodiment, the processor maps each of the multiple eMBMSs to the physical signal within the scheduling period based on the MSI message based on the program code stored in the storage medium.

For the specific examples in the embodiment, reference may be made to the examples described in the above embodiments and implementation, which are not repeated herein.

It is apparent that those skilled in the art should understand each of the foregoing modules or steps of the present invention may be realized with general-purpose computing devices, and they may be concentrated on a single computing device or distributed in a network constituted by a plurality of computing devices. They may be realized with program codes executable by computing devices, thereby they may be stored in storage devices and executed by computing devices, or they may be made into integrated circuit modules, or multiple of modules or steps thereof are made into a single integrated circuit module to realize. Therefore, the present invention is not limited to any combination of particular hardware or software.

The above is only preferred embodiments of the present invention and are not intended to limit the protection scope of the present invention. It is apparent that those skilled in the art can make modifications and variations to the present invention.

## Claims

1. A method for implementing service scheduling, comprising
allocating (S102), after a plurality of eMBMSs are paired, the plurality of enhanced Multimedia Broadcast/Multicast Services, eMBMSs, to a multicast subframe;
generating (S104) a multicast channel scheduling information, MSI, message based on multiplexing information of the plurality of eMBMSs; and
mapping (S106) the plurality of eMBMSs to a physical signal within a scheduling period based on the MSI message;
**characterized in that** before allocating (S102), after the plurality of eMBMSs are paired, the plurality of eMBMSs to the multicast subframe, the method further comprises:
calculating a number of symbols to be occupied of each of the plurality of eMBMSs in a physical layer; and
when a total number of symbols to be occupied by the plurality of eMBMSs in the physical layer is less than or equal to a service carrying capacity of a first multicast subframe, determining the first multicast subframe as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, determining the second multicast subframe as the multicast subframe to which the plurality of eMBMSs are to be allocated.

2. The method according to claim 1, wherein the multiplexing information comprises at least one of the following: a multiplexing style, subsets occupied by each eMBMS, or a resource occupied by each subset.

3. The method according to claim 2, wherein the multiplexing style comprises at least one of the following: frequency domain multiplexing, time domain multiplexing, or multiplexing by a serial number of transmission element.

4. The method according to claim 1, wherein the mapping (S106) the plurality of eMBMSs to a physical signal within a scheduling period based on the MSI message comprises:
generating different transmission channels for Multicast Traffic Channel, MTCH, for an LCID of each of the plurality of eMBMSs;
in each scheduling period, encoding an original data payload of the plurality of eMBMSs based on the MSI message and mapping each of the plurality of eMBMSs to a symbol position, corresponding to each generated transmission channel, of the multicast subframe.

5. The method according to claim 1, wherein the generating (S104) an MSI message based on multiplexing information of the plurality of eMBMSs comprises:
determining the multiplexing information used by the plurality of eMBMSs on the multicast subframe;
acquiring, based on the multiplexing information, at least one of the following information of an Oct field: a style domain, a set domain or a position domain; and
writing the MSI message into the Oct field;
wherein the style domain is used for mapping of a multiplexing style of the multicast subframe, the set domain is used to indicate a number of subsets divided from a single multicast subframe under the present multiplexing style, and the position domain is used for mapping of a time-frequency position occupied by each of the plurality of eMBMSs in the multicast subframe.

6. The method according to claim 5, before the determining the multiplexing information used by each of the plurality of eMBMSs on the multicast subframe, further comprising:
filling in the MSI message, with a Logic ID, LCID, of each of the plurality of eMBMSs and a same serial number of a stop multicast subframe.

7. A device for implementing service scheduling, comprising
an allocation module (20), configured to allocate, after a plurality of enhanced Multimedia Broadcast/Multicast Services, eMBMSs, are paired, the plurality of eMBMSs to a multicast subframe;
a generation module (22), configured to generate a multicast channel scheduling information, MSI, message based on multiplexing information of the plurality of eMBMSs; and
a mapping module (24), configured to map the plurality of eMBMSs to a physical signal within a scheduling period based on the MSI message;
**characterized in that** the device further comprises:
a calculation module, configured to calculate a number of symbols to be occupied by each of the plurality of eMBMSs in a physical layer before the allocation module allocates the plurality of eMBMSs to the multicast subframe after the plurality of eMBMSs are paired;
a determination module, configured to: when a total number of symbols to be occupied by the plurality of eMBMSs in the physical layer is less than or equal to a service carrying capacity of a first multicast subframe, determining the first multicast subframe as the multicast subframe to which the plurality of eMBMSs are to be allocated, or when scheduling periods of the plurality of eMBMSs are consistent and a total number of symbols to be occupied by the plurality of eMBMSs in the physical layer is less than or equal to a service carrying capacity of a second multicast subframe, determining the second multicast subframe as the multicast subframe to which the plurality of eMBMSs are to be allocated.

8. The device according to claim 7, wherein the generation module (22) comprises:
a determination unit, configured to determine the multiplexing information used by the plurality of eMBMSs on the multicast subframe;
an acquisition unit, configured to acquire, based on the multiplexing information, at least one of the following information of an Oct field: a style domain, a set domain or a position domain; and
a writing unit, configured to write the MSI message into the Oct field;
wherein the style domain is used for mapping of a multiplexing style of the multicast subframe, the set domain is used to indicate a number of subsets divided from a single multicast subframe under a present multiplexing style, and the position domain is used for mapping of a time-frequency position occupied by each of the plurality of eMBMSs in the multicast subframe.

9. The device according to claim 7, wherein the mapping module (24) comprises:
a generation unit, configured to generate different MTCH transmission channels for a LCID of each of the plurality of eMBMSs;
a mapping unit, configured to, in each scheduling period, encode an original data payload of the plurality of eMBMSs based on the MSI message and map each of the plurality of eMBMSs to a symbol position, corresponding to each generated transmission channel, of the multicast subframe.

10. A storage medium, having a program stored thereon, wherein the program, when being executed, implements the method according to any one claims 1 to 6.

11. A processor, configured to run a program, wherein the program, when being executed, cause the processor to implement the method according to any one claims 1 to 6.

## Patentansprüche

1. Verfahren zum Implementieren einer Dienstplanung, umfassend:
Zuweisen (S102) der Vielzahl von erweiterten Multimedia-Broadcast/Multicast-Diensten (eMBMS) zu einem Multicast-Subframe, nachdem eine Vielzahl von eMBMS gepaart ist;
Erzeugen (S104) einer Multicast-Kanal-Planungsinformations(MSI)-Nachricht basierend auf Multiplexing-Informationen der Vielzahl von eMBMS; und
Abbilden (S106) der Vielzahl von eMBMS auf ein physisches Signal innerhalb einer Planungsperiode basierend auf der MSI-Nachricht;
**dadurch gekennzeichnet, dass**
vor dem Zuweisen (S102) der Vielzahl von eMBMS an den Multicast-Subframe, nachdem die Vielzahl von eMBMS gepaart ist, das Verfahren ferner Folgendes umfasst:
Berechnen einer Anzahl von Symbolen, die durch jeden der Vielzahl von eMBMS in einer physischen Schicht zu belegen ist; und
wenn eine Gesamtzahl von Symbolen, die durch die Vielzahl von eMBMS in der physischen Schicht zu belegen ist, kleiner oder gleich einer Diensttragfähigkeit eines ersten Multicast-Subframes ist, Bestimmen des ersten Multicast-Subframes als den Multicast-Subframe, dem die Vielzahl von eMBMS zuzuweisen ist, oder, wenn Planungsperioden der Vielzahl von eMBMS konsistent sind und eine Gesamtzahl von Symbolen, die durch die Vielzahl von eMBMS in der physischen Schicht zu belegen ist, kleiner oder gleich einer Diensttragfähigkeit eines zweiten Multicast-Subframes ist, Bestimmen des zweiten Multicast-Subframes als den Multicast-Subframe, dem die Vielzahl von eMBMS zuzuweisen ist.

2. Verfahren nach Anspruch 1, wobei die Multiplexing-Informationen mindestens eines von Folgendem umfassen: einem Multiplexing-Stil, durch jeden eMBMS belegte Teilsätze oder eine durch jeden Teilsatz belegte Ressource.

3. Verfahren nach Anspruch 2, wobei der Multiplexing-Stil mindestens eines von Folgendem umfasst: Frequenzbereich-Multiplexing, Zeitbereich-Multiplexing oder Multiplexing durch eine Seriennummer eines Übertragungselements.

4. Verfahren nach Anspruch 1, wobei das Abbilden (S106) der Vielzahl von eMBMS auf ein physisches Signal innerhalb einer Planungsperiode basierend auf der MSI-Nachricht Folgendes umfasst:
Erzeugen verschiedener Übertragungskanäle für einen Multicast Traffic Channel (MTCH) für eine LCID jedes der Vielzahl von eMBMS;
Codieren, in jeder Planungsperiode, einer ursprünglichen Datennutzlast der Vielzahl von eMBMS basierend auf der MSI-Nachricht und Abbilden jedes der Vielzahl von eMBMS auf eine Symbolposition, die jedem erzeugten Übertragungskanal entspricht, des Multicast-Subframes.

5. Verfahren nach Anspruch 1, wobei das Erzeugen (S104) einer MSI-Nachricht basierend auf Multiplexing-Informationen der Vielzahl von eMBMS Folgendes umfasst:
Bestimmen der durch die Vielzahl von eMBMS verwendeten Multiplexing-Informationen auf dem Multicast-Subframe;
Erfassen mindestens einer der folgenden Informationen eines Oct-Felds basierend auf den Multiplexing-Informationen: einer Stildomäne, einer Setzdomäne oder einer Positionsdomäne; und
Schreiben der MSI-Nachricht in das Oct-Feld;
wobei die Stildomäne zum Abbilden eines Multiplexing-Stils des Multicast-Subframes verwendet wird, die Setzdomäne dazu verwendet wird, eine Anzahl von Teilsätzen anzugeben, die unter dem aktuellen Multiplexing-Stil von einem einzigen Multicast-Subframe unterteilt ist, und die Positionsdomäne zum Abbilden einer Zeit-Frequenz-Position verwendet wird, die durch jeden der Vielzahl von eMBMS in dem Multicast-Subframe belegt ist.

6. Verfahren nach Anspruch 5, vor dem Bestimmen der Multiplexing-Informationen, die durch jeden der Vielzahl von eMBMS auf dem Multicast-Subframe verwendet werden, ferner umfassend:
Ausfüllen der MSI-Nachricht mit einer Logik-ID (LCID) jedes der Vielzahl von eMBMS und einer gleichen Seriennummer eines Stopp-Multicast-Subframes.

7. Vorrichtung zum Implementieren einer Dienstplanung, umfassend:
ein Zuweisungsmodul (20), das dazu konfiguriert ist, nachdem eine Vielzahl von erweiterten Multimedia-Broadcast/Multicast-Diensten (eMBMS) gepaart sind, die Vielzahl von eMBMS einem Multicast-Subframe zuzuweisen;
ein Erzeugungsmodul (22), das dazu konfiguriert ist, eine Multicast-Kanal-Planungsinformations(MSI)-Nachricht basierend auf Multiplexing-Informationen der Vielzahl von eMBMS zu erzeugen; und
ein Abbildungsmodul (24), das dazu konfiguriert ist, die Vielzahl von eMBMS innerhalb einer Planungsperiode basierend auf der MSI-Nachricht auf ein physisches Signal abzubilden;
**dadurch gekennzeichnet, dass** die Vorrichtung ferner Folgendes umfasst:
ein Berechnungsmodul, das dazu konfiguriert ist, eine Anzahl von Symbolen zu berechnen, die durch jeden der Vielzahl von eMBMS in einer physischen Schicht zu belegen sind, bevor das Zuweisungsmodul die Vielzahl von eMBMS dem Multicast-Subframe zuweist, nachdem die Vielzahl von eMBMS gepaart ist;
ein Bestimmungsmodul, das zu Folgendem konfiguriert ist: wenn eine Gesamtzahl von Symbolen, die durch die Vielzahl von eMBMS in der physischen Schicht zu belegen ist, kleiner oder gleich einer Diensttragfähigkeit eines ersten Multicast-Subframes ist, Bestimmen des ersten Multicast-Subframes als den Multicast-Subframe, dem die Vielzahl von eMBMS zuzuweisen ist, oder, wenn Planungsperioden der Vielzahl von eMBMS konsistent sind und eine Gesamtzahl von Symbolen, die durch die Vielzahl von eMBMS in der physischen Schicht zu belegen ist, kleiner oder gleich einer Diensttragfähigkeit eines zweiten Multicast-Subframes ist, Bestimmen des zweiten Multicast-Subframes als den Multicast-Subframe, dem die Vielzahl von eMBMS zuzuweisen ist.

8. Vorrichtung nach Anspruch 7, wobei das Erzeugungsmodul (22) Folgendes umfasst:
eine Bestimmungseinheit, die dazu konfiguriert ist, die durch die Vielzahl von eMBMS verwendeten Multiplexing-Informationen auf dem Multicast-Subframe zu bestimmen;
eine Erfassungseinheit, die dazu konfiguriert ist, basierend auf den Multiplexing-Informationen mindestens eine der folgenden Informationen eines Oct-Felds zu erfassen: eine Stildomäne, eine Setzdomäne oder eine Positionsdomäne; und
eine Schreibeinheit, die dazu konfiguriert ist, die MSI-Nachricht in das Oct-Feld zu schreiben;
wobei die Stildomäne zum Abbilden eines Multiplexing-Stils des Multicast-Subframes verwendet wird, die Setzdomäne verwendet wird, um eine Anzahl von Teilsätzen anzugeben, die unter einem aktuellen Multiplexing-Stil von einem einzigen Multicast-Subframe unterteilt ist, und die Positionsdomäne zum Abbilden einer Zeit-Frequenz-Position verwendet wird, die durch jeden der Vielzahl von eMBMS in dem Multicast-Subframe belegt ist.

9. Vorrichtung nach Anspruch 7, wobei das Abbildungsmodul (24) Folgendes umfasst:
eine Erzeugungseinheit, die dazu konfiguriert ist, verschiedene MTCH-Übertragungskanäle für eine LCID jedes der Vielzahl von eMBMS zu erzeugen;
eine Abbildungseinheit, die dazu konfiguriert ist, in jeder Planungsperiode eine ursprünglichen Datennutzlast der Vielzahl von eMBMS basierend auf der MSI-Nachricht zu codieren und jeden der Vielzahl von eMBMS auf eine Symbolposition, die jedem erzeugten Übertragungskanal entspricht, des Multicast-Subframes abzubilden.

10. Speichermedium mit einem darauf gespeicherten Programm, wobei das Programm bei Ausführung das Verfahren nach einem der Ansprüche 1 bis 6 implementiert.

11. Prozessor, der dazu konfiguriert ist, ein Programm auszuführen, wobei das Programm bei Ausführung den Prozessor dazu veranlasst, das Verfahren nach einem der Ansprüche 1 bis 6 zu implementieren.

## Revendications

1. Procédé de mise en œuvre d'une programmation de service, comprenant :
l'attribution (S102), après appariement d'une pluralité d'eMBMS, de la pluralité de services améliorés de diffusion/multidiffusion multimédia, eMBMS, à une sous-trame de multidiffusion ;
la génération (S104) d'un message d'information de programmation de canal de multidiffusion, MSI, sur la base d'informations de multiplexage de la pluralité d'eMBMS ; et
le mappage (S106) de la pluralité d'eMBMS à un signal physique dans une période de programmation sur la base du message MSI ;
**caractérisé en ce que**
avant l'attribution (S102), après appariement de la pluralité d'eMBMS, de la pluralité d'eMBMS à la sous-trame de multidiffusion, le procédé comprend en outre :
le calcul d'un nombre de symboles devant être occupés de chacun de la pluralité d'eMBMS dans une couche physique ; et
lorsqu'un nombre total de symboles devant être occupés par la pluralité d'eMBMS dans la couche physique est inférieur ou égal à une capacité de transport de service d'une première sous-trame de multidiffusion, la détermination de la première sous-trame de multidiffusion en tant que sous-trame de multidiffusion à laquelle la pluralité d'eMBMS doivent être attribués, ou lorsque des périodes de programmation de la pluralité d'eMBMS sont cohérentes et qu'un nombre total de symboles devant être occupés par la pluralité d'eMBMS dans la couche physique est inférieur ou égal à une capacité de transport de service d'une seconde sous-trame de multidiffusion, la détermination de la seconde sous-trame de multidiffusion en tant que sous-trame de multidiffusion à laquelle la pluralité d'eMBMS doivent être attribués.

2. Procédé selon la revendication 1, dans lequel les informations de multiplexage comprennent au moins l'un des éléments suivants : un style de multiplexage, des sous-ensembles occupés par chaque eMBMS, ou une ressource occupée par chaque sous-ensemble.

3. Procédé selon la revendication 2, dans lequel le style de multiplexage comprend au moins l'un des multiplexages suivants :
multiplexage dans le domaine fréquentiel, multiplexage dans le domaine temporel ou multiplexage par un numéro de série d'un élément de transmission.

4. Procédé selon la revendication 1, dans lequel le mappage (S106) de la pluralité d'eMBMS à un signal physique dans une période de programmation sur la base du message MSI comprend :
la génération de différents canaux de transmission pour un canal de trafic multidiffusion (MTCH) pour un LCID de chacun de la pluralité d'eMBMS ;
dans chaque période de programmation, le codage d'une charge utile de données d'origine de la pluralité d'eMBMS sur la base du message MSI et le mappage de chacun de la pluralité d'eMBMS à une position de symbole, correspondant à chaque canal de transmission généré, de la sous-trame de multidiffusion.

5. Procédé selon la revendication 1, dans lequel la génération (S104) d'un message MSI sur la base d'informations de multiplexage de la pluralité d'eMBMS comprend :
la détermination des informations de multiplexage utilisées par la pluralité d'eMBMS sur la sous-trame de multidiffusion ;
l'acquisition, sur la base des informations de multiplexage, d'au moins l'une des informations suivantes d'un champ Oct : un domaine de style, un domaine défini ou un domaine de position ; et
l'écriture du message MSI dans le champ Oct ;
dans lequel le domaine de style est utilisé pour mapper un style de multiplexage de la sous-trame de multidiffusion, le domaine défini est utilisé pour indiquer un nombre de sous-ensembles divisés à partir d'une sous-trame de multidiffusion unique sous le style de multiplexage actuel, et le domaine de position est utilisé pour mapper une position temps-fréquence occupée par chacun de la pluralité d'eMBMS dans la sous-trame de multidiffusion.

6. Procédé selon la revendication 5, avant la détermination des informations de multiplexage utilisées par chacun de la pluralité d'eMBMS sur la sous-trame de multidiffusion, comprenant en outre :
le remplissage dans le message MSI, avec un ID logique, LCID, de chacun de la pluralité d'eMBMS et un même numéro de série d'une sous-trame de multidiffusion d'arrêt.

7. Dispositif de mise en œuvre de programmation de service, comprenant :
un module d'attribution (20), configuré pour attribuer, après appariement d'une pluralité de services améliorés de diffusion/multidiffusion multimédia, eMBMS, la pluralité d'eMBMS à une sous-trame de multidiffusion ;
un module de génération (22), configuré pour générer un message d'informations de programmation de canal de multidiffusion, MSI, sur la base d'informations de multiplexage de la pluralité d'eMBMS ; et
un module de mappage (24), configuré pour mapper la pluralité d'eMBMS à un signal physique dans une période de programmation sur la base du message MSI ;
**caractérisé en ce que** le dispositif comprend en outre :
un module de calcul, configuré pour calculer un nombre de symboles devant être occupés par chacun de la pluralité d'eMBMS dans une couche physique avant que le module d'attribution attribue la pluralité d'eMBMS à la sous-trame de multidiffusion après appariement de la pluralité d'eMBMS ;
un module de détermination, configuré pour : lorsqu'un nombre total de symboles devant être occupés par la pluralité d'eMBMS dans la couche physique est inférieur ou égal à une capacité de transport de service d'une première sous-trame de multidiffusion, la détermination de la première sous-trame de multidiffusion en tant que sous-trame de multidiffusion à laquelle la pluralité d'eMBMS doivent être attribués, ou lorsque des périodes de programmation de la pluralité d'eMBMS sont cohérentes et qu'un nombre total de symboles devant être occupés par la pluralité d'eMBMS dans la couche physique est inférieur ou égal à une capacité de transport de service d'une seconde sous-trame de multidiffusion, la détermination de la seconde sous-trame de multidiffusion en tant que sous-trame de multidiffusion à laquelle la pluralité d'eMBMS doivent être attribués.

8. Dispositif selon la revendication 7, dans lequel le module de génération (22) comprend :
une unité de détermination, configurée pour déterminer les informations de multiplexage utilisées par la pluralité d'eMBMS sur la sous-trame de multidiffusion ;
une unité d'acquisition, configurée pour acquérir, sur la base des informations de multiplexage, au moins l'une des informations suivantes d'un champ Oct : un domaine de style, un domaine défini ou un domaine de position ; et
une unité d'écriture, configurée pour écrire le message MSI dans le champ Oct ;
dans lequel le domaine de style est utilisé pour mapper un style de multiplexage de la sous-trame de multidiffusion, le domaine défini est utilisé pour indiquer un nombre de sous-ensembles divisés à partir d'une sous-trame de multidiffusion unique sous un style de multiplexage actuel, et le domaine de position est utilisé pour mapper une position temps-fréquence occupée par chacun de la pluralité d'eMBMS dans la sous-trame de multidiffusion.

9. Dispositif selon la revendication 7, dans lequel le module de mappage (24) comprend :
une unité de génération, configurée pour générer différents canaux de transmission MTCH pour un LCID de chacun de la pluralité d'eMBMS ;
une unité de mappage, configurée pour, dans chaque période de programmation, coder une charge utile de données d'origine de la pluralité d'eMBMS sur la base du message MSI et mapper chacun de la pluralité d'eMBMS à une position de symbole, correspondant à chaque canal de transmission généré, de la sous-trame de multidiffusion.

10. Support d'enregistrement sur lequel est stocké un programme, dans lequel le programme, lorsqu'il est exécuté, met en œuvre le procédé selon l'une quelconque des revendications 1 à 6.

11. Processeur, configuré pour exécuter un programme, dans lequel le programme, lorsqu'il est exécuté, amène le processeur à mettre en œuvre le procédé selon l'une quelconque des revendications 1 à 6.
